# EUROPÄISCHE PATENTSCHRIFT

(11) **EP 3 803 151 B1**
(45) Veröffentlichungstag und Bekanntmachung des Hinweises auf die Patenterteilung: **05.08.2026**
(21) Anmeldenummer: 19748662.4
(22) Anmeldetag: 22.05.2019
(51) Int. Cl.: F16F 9/32

(54) **VERFAHREN ZUR HERSTELLUNG EINES KOLBENS**
METHOD FOR PRODUCING A PISTON
PROCÉDÉ DE PRODUCTION D'UN PISTON

(30) Priorität: 24.05.2018 DE 102018112458
(43) Veröffentlichungstag der Anmeldung: 14.04.2021
(73) Patentinhaber: Stabilus GmbH, 56070 Koblenz (DE)
(72) Erfinder: LÖHKEN, Lars, 53545 Linz am Rhein (DE); MÜLLER, Markus, 56072 Koblenz (DE); PIROTH, Raphael, 56357 Miehlen (DE); PROBST, Ulrich, 56204 Hilscheid (DE)
(74) Vertreter: Bernsmann, Falk
(86) Internationale Anmeldenummer: PCT/EP2019/000161
(87) Internationale Veröffentlichungsnummer: WO 2019/223899

(56) Entgegenhaltungen:
- EP-A1- 2 951 458
- DE-A1- 19 615 584
- DE-C1- 19 735 249

## Beschreibung

Die Erfindung betrifft ein Verfahren zur Herstellung eines Kolbens, welcher an einem Kolbengleitaggregat befestigbar ist, welches entlang seiner Längsachse in einem Zylinder bewegbar ist, wobei der Kolben einen scheibenförmigen Grundkörper aufweist, wobei der Kolben dazu geeignet und bestimmt ist, zwei Bereiche des mit einem Medium gefüllten Zylinders gegeneinander abzudichten.

Dämpfer, insbesondere rein progressive, also Dämpfer bei denen die aufzuwendende Kraft zum Hineindrücken und/oder Herausziehen des Kolbengleitaggregats in oder aus dem Zylinder mit zunehmendem Federweg schneller als mit linearer Abhängigkeit zunimmt, weisen Kolben mit unveränderlichen Bypässen, bzw. Strömungspfaden auf, durch welche das Medium bei Hineindrücken oder Herausziehen des Kolbengleitaggregats in den Dämpfungszylinder aus einem Bereich des Zylinders in einen anderen Bereich des Zylinders strömt. Hierbei steigt der Widerstand gegen das Fließen des verdrängten Mediums mit der Fließgeschwindigkeit an und erzeugt so eine Progressivität. Von entscheidender Bedeutung für die Progressivität und die Dämpfungskennlinie ist dabei die Dimensionierung der Bypässe. Diese werden üblicherweise bereits werkzeugseitig wie bei Sinter- oder Kunststoffteilen oder spanend wie beispielsweise bei Aluminiumkolben eingebracht. Insbesondere bei Sinterkolben werden diese Bypässe üblicherweise bereits beim Pressen des Kolbens aus dem sinterbaren Pulver mit ausgeformt.

Die spanende Bearbeitung kommt an ihre Grenzen bei besonders kleinen Bypässen, insofern als dass die prozessbedingten Toleranzen im Verhältnis zum Bypass zu groß werden. Mögliche Gründe für die prozessbedingten Toleranzen sind beispielsweise Werkzeugverschleiß, Temperaturänderungen an der Maschine oder die Einrichtgenauigkeit.

Beim Pressen von Sinterkolben besteht dieselbe Problematik hinsichtlich der prozessbedingten Toleranzen der Bypässe. Beim Pressen mit anschließendem Sintern von Sinterkolben können Fertigungstoleranzen im Bereich von ISO-Toleranz 7 (IT 7) bis hin zu IT 6 (in günstigen Fällen) erreicht werden. Dies ist aber insbesondere bei der Fertigung von kleinen Bypässen nicht ausreichend. Darüber hinaus folgt auf den Pressvorgang häufig eine Oberflächenbehandlung zur Entgratung des Bauteils, beispielsweise durch Gleitschleifen oder Kugelstrahlen, welche die Toleranzen der Bypässe negativ beeinflussen kann.

Aufgabe der vorliegenden Erfindung ist es, ein Verfahren zur Fertigung eines Kolbens bereit zu stellen, welches es ermöglicht, Kolben mit geringeren Fertigungstoleranzen in industrieller Massenfertigung herzustellen und somit dem zuvor beschriebenen Problem entgegen zu wirken.

Die Aufgabe wird durch ein Verfahren zur Herstellung eines Kolbens, welcher an einem Kolbengleitaggregat befestigbar ist, welches entlang seiner Längsachse in einem Zylinder bewegbar ist, gelöst. Dabei umfasst der Kolben einen scheibenförmigen Grundkörper, wobei der Kolben dazu geeignet und bestimmt ist, zwei Bereiche des mit einem Medium gefüllten Zylinders gegeneinander abzudichten. Das erfindungsgemäße Verfahren zur Herstellung eines Kolbens umfasst dabei die Schritte:
a. Herstellung des Kolbens durch Pressen eines Materials in eine Kolbenform;
b. Einpressen wenigstens eines Strömungspfads in den Kolben, mittels eines Prägewerkzeugs, welches eine erhabene und rotationssymmetrische Struktur aufweist.

In einem ersten Verfahrensschritt wird ein Material in eine Kolbenform gepresst. Das Material ist dabei bevorzugt Metall, wie z. B. Stahl oder Eisen, eine Keramik oder ein sinterbares Pulver, wie z.B. ein Metallpulver, beispielsweise Aluminium- oder Eisenpulver, oder aber ein Keramikpulver wie zum Beispiel Aluminiumoxid oder Siliziumcarbid. Weiterhin ist die Verwendung jedes anderen dem Fachmann bekannten, sinterbaren Materials in Pulverform denkbar oder auch die Verwendung jedes anderen Metalls. Im Pressvorgang wird das Material in eine Kolbenform gepresst. Dabei sind verschiedene Druckverteilungen auf das Material denkbar. Beispielsweise kann das Pressen uniaxial und/oder auch isostatisch erfolgen. Der so hergestellte Kolben weist nach dem Pressvorgang bevorzugt noch keinen Bypass mit einem Strömungspfad für das Medium auf. Es ist weiterhin aber denkbar, dass der Kolben nach dem Pressvorgang bereits eine Vorform eines Bypasses, oder den Bypass selbst aufweist. Bevorzugt erfolgt das Pressen des Kolbens mittels Kaltschlagen oder einer anderen, dem Fachmann bekannten Kaltumformtechnik.

Besteht der zuvor hergestellte Kolben aus einem sinterbaren Pulver wird der zuvor im Pressvorgang hergestellte Kolben in einem nun folgenden Sinterprozess unter Einfluss von beispielsweise Temperatur und/oder Druck gesintert. In diesem Verfahrensschritt können unter anderem Eigenschaften wie beispielsweise Härte, Festigkeit und Temperaturleitfähigkeit des Kolbens eingestellt werden.

Besteht der zuvor hergestellte Kolben aus einem sinterbaren Pulver, wird der zuvor gesinterte Kolben nun im Anschluss an das Sintern entgratet. Bevorzugt erfolgt dies mittels Kugelstrahlen oder Gleitschleifen, aber auch andere, dem Fachmann bekannte Entgratungsverfahren sind denkbar.

Im letzten Verfahrensschritt wird vorzugsweise die Oberfläche des Kolbens mit Hilfe eines Prägewerkzeugs geglättet. Dafür wird das Prägewerkzeug mit einer definierten Kraft und/oder einem definierten Maß an den zu glättenden Oberflächen flächig gegen den Kolben gepresst. Das Prägewerkzeug weist eine erhabene rotationssymmetrische Struktur auf, welche beim Pressen des Prägewerkzeugs gegen den Kolben in den Kolben eingeprägt wird. Dabei entsteht eine negative Abformung der erhabenen rotationssymmetrischen Struktur in der Kolbenoberfläche. Der Kolben wird dabei durch das Prägewerkzeug druckumgeformt. Es ist allerdings auch denkbar, dass in diesem Verfahrensschritt keine Glättung der Oberfläche des Kolbens durch das Prägewerkzeug erfolgt, sondern das Prägewerkzeug lediglich die erhabene rotationssymmetrische Struktur in den Kolben prägt. Bevorzugt werden jedoch beide Schritte, Glättung der Oberfläche und Einpressen des Strömungspfads, ausgeführt. Durch die so besonders glatte Oberfläche im Bereich des Strömungspfades ist eine besonders homogene und kontrollierte Strömung entlang des Strömungspfades erreichbar.

Das Prägewerkzeug ist bevorzugt als Kalibrierstempel ausgeführt, es kann aber auch als jede andere, dem Fachmann bekannte Werkzeugart zum Umformen oder Glätten einer Oberfläche ausgeführt sein. Kalibrierstempel werden bevorzugt im Anschluss an die grundlegende Formgebung eines Bauteils verwendet um beispielsweise die Oberfläche des Bauteils zu glätten oder auch die Formgebung hinsichtlich einer geringeren Fertigungstoleranz zu optimieren. Es ist weiterhin aber auch möglich, direkt mit einem Kalibrierstempel eine Umformung eines Bauteils durchzuführen. Der Kalibrierstempel ist bevorzugt rotationssymmetrisch ausgeformt, sodass dieser regelmäßig präzise nachbearbeitet werden kann, um die geringe Fertigungstoleranz, bevorzugt im Bereich von IT 3 bis IT 4 (Chargenstreuung) und IT 4 bis IT 6 (chargenübergreifend), zu wahren.

Gemäß der Erfindung weist die erhabene, rotationssymmetrische Struktur des Prägewerkzeugs beim Aufsetzen auf den Kolben, welcher einen ringförmigen Kolbenbund umfasst, mindestens einen Kreuzungspunkt mit dem ringförmigen Kolbenbund auf.

Der Kolben weist einen ringförmigen Kolbenbund auf. Der Kolbenbund ist dabei bevorzugt als erhabene Struktur auf der Kolbenoberfläche ausgeführt. Die Oberfläche des Kolbenbundes stellt eine Dichtfläche dar, welche bei Drücken gegen eine Dichtgegenfläche zwei Bereiche des mit einem Medium gefüllten Zylinders gegeneinander abdichtet. Die Dichtgegenfläche ist dabei die Oberfläche eines Dichtelements, beispielsweise eines Dichtrings, beispielsweise aus Metall oder Kunststoff. Dabei ist es denkbar, dass das Dichtelement flexibel ist. Weiterhin ist es denkbar, dass das Dichtelement rotationssymmetrisch ist oder aber nichtrotationssymmetrische Elemente, beispielsweise zum Durchleiten des Mediums aufweist.

Das Dichtelement ist an der Oberfläche des Kolbens, welche den ringförmigen Kolbenbund aufweist, angeordnet. Das Dichtelement kann dabei direkt an dieser Oberfläche anliegend fixiert sein. Dabei ist eine gemeinsame Anordnung von Kolben und Dichtelement an dem Kolbengleitaggregat denkbar oder auch eine Anordnung bei der nur der Kolben oder das Dichtelement an dem Kolbengleitaggregat angeordnet ist. Weiterhin ist es denkbar, dass das Dichtelement schwimmend am Kolben angeordnet ist und nur bei axialer Betätigung des Kolbengleitaggregats in eine bestimmte Richtung (in den Zylinder hinein oder aus dem Zylinder heraus) durch eine Druckdifferenz zwischen den zwei Bereichen des Zylinders an die Oberfläche des Kolben angepresst wird.

Bei Aufsetzten des Prägewerkzeugs auf die Kolbenoberfläche ist das Prägewerkzeug derart zum Kolben angeordnet, dass die erhabene rotationssymmetrische Struktur des Prägewerkzeugs und der ringförmige Kolbenbund des Kolbens an zumindest einer Stelle aufeinander zu liegen kommen und zumindest einen Kreuzungspunkt aufweisen. Am Kreuzungspunkt kreuzt die rotationssymmetrische Struktur des Prägewerkzeugs dabei den Kolbenbund von der dem Kolbenmittelpunkt zugewandten Seite, also der Innenseite des Kolbenbunds, zur dem Kolbenmittelpunkt abgewandten Seite, also der Außenseite des Kolbenbunds, oder auch von der dem Kolbenmittelpunkt abgewandten Seite des Kolbenbunds zur dem Kolbenmittelpunkt zugewandten Seite des Kolbenbunds.

Das Prägewerkzeug wird nun in der zuvor beschriebenen Anordnung zum Kolben gegen den Kolben gepresst oder der Kolben gegen das Prägewerkzeug gepresst, wobei der Anpressdruck und/oder das definierte Maß in beiden Fällen genau einstellbar ist. Der Anpressdruck bzw. das Maß wird dabei in Abhängigkeit verschiedener Parameter, beispielsweise entsprechend der Festigkeit, Elastizität und Plastizität der verwendeten Materialien bzw. ihrer spezifischen Fließgrenze oder der Prozesstemperatur, so gewählt, dass der Kolben durch das Anpressen des Prägewerkzeugs gezielt plastisch verformbar ist. Es ist weiterhin auch denkbar, dass der Anpressdruck und/oder das definierte Maß in Abhängigkeit anderer, dem Fachmann bekannter Parameter gewählt werden.

Gemäß der Erfindung wird durch das Einpressen der erhabenen, rotationssymmetrischen Struktur des Prägewerkzeugs in den Kolben an mindestens einem Kreuzungspunkt der erhabenen, rotationssymmetrischen Struktur des Prägewerkzeugs mit dem ringförmigen Kolbenbund der ringförmige Kolbenbund zumindest teilweise in eine abgeflachtere und/oder vertiefte Form druckumgeformt.

Während des Einpressvorgangs werden nun die erhabene rotationssymmetrische Struktur des Prägewerkzeugs und der ringförmige Kolbenbund an zumindest dem mindestens einen Kreuzungspunkt gegeneinander gepresst. Dabei drückt die erhabene rotationssymmetrische Struktur des Prägewerkzeugs den ringförmigen Kolbenbund an zumindest dem mindestens einen Kreuzungspunkt oder in zumindest einem Kreuzungsbereich in eine abgeflachtere Form, sodass der ringförmige Kolbenbund mindestens an dieser Stelle in eine flachere Form druckumgeformt wird. Der ringförmige Kolbenbund wird somit.an zumindest einer Stelle durch die erhabene rotationssymmetrische Struktur des Prägewerkzeugs abgeplattet. Dies impliziert, dass die Höhe des Kolbenbundes, bezogen auf die Richtung senkrecht zur durch den scheibenförmigen Grundkörper definierten Ebene und parallel zum Kolbengleitaggregat (wenn der Kolben an dem Kolbengleitaggregat angeordnet ist) an der abgeplatteten Stelle reduziert ist. Der Kreuzungspunkt oder der Kreuzungsbereich ist dabei definiert durch die Kontaktfläche zwischen rotationssymmetrischer Struktur und Kolbenbund. Der Kolbenbund wird dabei auf der gesamten Kontaktfläche von rotationssymmetrischer Struktur und Kolbenbund abgeplattet.

Durch diese Abplattung des ringförmigen Kolbenbunds liegt die Oberfläche des Kolbenbunds bei Anordnung an einem Dichtelement im Bereich der Abplattung nicht mehr an der Dichtgegenfläche an. Am Kreuzungspunkt, an dem die Abplattung des Kolbenbunds sich von der dem Kolbenmittelpunkt zugewandten Seite des Kolbenbunds zur dem Kolbenmittelpunkt abgewandten Seite des Kolbenbunds verläuft, liegt die Oberfläche des Kolbenbund somit gar nicht an der Dichtgegenfläche des Dichtelements an, wodurch ein Strömungspfad für das Medium von einem der zwei Bereiche des mit einem Medium gefüllten Zylinders, welche durch den Kolben gegeneinander abgedichtet werden, in den anderen Bereich entsteht. Dieser Strömungspfad stellt den zuvor beschriebenen Bypass dar, welcher die Dämpferkennlinie des Dämpfers bedingt. Die Verringerung der Höhe des Kolbenbundes an der zumindest einen abgeplatteten Stelle ist dabei so groß, dass ein entlang des Strömungspfads vom Medium durchströmbarer Bypass entsteht.

Durch die Fertigung des Bypasses mit einem Prägewerkzeug, insbesondere mit einem Kalibrierstempel, kann eine reduzierte Fertigungstoleranz im Bereich von IT 3 bis IT 4 (Chargenstreuung) und IT 4 bis IT 6 (chargenübergreifend) erreicht werden und so ein Kolben entsprechend der erfindungsgemäßen Aufgabe in industrieller Serienfertigung hergestellt werden.

Gemäß zumindest einer weiteren Ausführungsform weist der ringförmige Kolbenbund zumindest eine mäanderförmige Aus- und/oder Einbuchtung auf, welche bevorzugt mindestens einen radial und einen tangential zum Kolben ausgerichteten Abschnitt aufweist.

Der ringförmige Kolbenbund weist bevorzugt mindestens eine mäanderförmige Aus- oder Einbuchtung und/oder wenigstens ein Richtungswechsel auf. Im Falle einer mäanderförmigen Einbuchtung verläuft der ringförmige Kolbenbund nicht völlig kreisförmig, auf der Oberfläche des Kolbens, sondern beschreibt zu Beginn der Einbuchtung eine erste Kurve in Richtung des Mittelpunkts der Kolbenoberfläche auf welcher der Kolbenbund angeordnet ist mit einem daran anschließenden geraden Abschnitt und weist damit einen Kolbenbundabschnitt auf, welcher radial in Bezug auf den scheibenförmigen Grundkörper des Kolbens angeordnet ist.

Im weiteren Verlauf der Einbuchtung weist der Kolbenbund bevorzugt eine zweite Kurve in die entgegengesetzte Richtung auf ebenfalls mit einem daran anschließenden geraden Abschnitt und weist damit einen Kolbenbundabschnitt auf, welcher tangential in Bezug auf den scheibenförmigen Grundkörper des Kolbens angeordnet ist. Daran anschließend weist der Kolbenbund bevorzugt eine dritte Kurve in dieselbe Richtung wie die zweite Kurve auf an welche ebenfalls ein gerader Abschnitt anschließt. Die Einbuchtung weist damit einen zweiten Kolbenbundabschnitt auf, welcher radial in Bezug auf den scheibenförmigen Grundkörper des Kolbens angeordnet ist. An diesen zweiten radialen Abschnitt schließt sich eine vierte Kurve an, welche in dieselbe Richtung wie die erste Kurve verläuft, sodass der Kolbenbund nun weiter entlang der kreisförmigen Grundform verläuft. Im Falle einer Ausbuchtung ist der Kolbenbund ähnlich dieser Beschreibung geformt mit dem Unterschied, dass die Kurven in die jeweils andere Richtung führen bzw., dass der erste radial angeordnete Abschnitt des Kolbenbunds vom Mittelpunkt der Kolbenoberfläche auf welcher der Kolbenbund angeordnet ist, wegführt. Weiterhin ist es denkbar, dass der Kolbenbund statt Kurven Ecken im Bereich der Ein- oder Ausbuchtung aufweist.

Die zuvor beschriebene, bevorzugte Ein- oder Ausbuchtung weist eine eckige "U"-Form mit oder ohne abgerundeten Ecken auf. Es sind jedoch anders geformte Ein- oder Ausbuchtungen denkbar, beispielsweise eine "V"-Form oder eine halbrunde Form, oder jede andere, dem Fachmann bekannte Form, mit welcher die erhabene rotationssymmetrische Struktur des Prägewerkzeugs den Kolbenbund an zumindest einer Stelle kreuzt.

Gemäß zumindest einer weiteren Ausführungsform ist mindestens ein Kreuzungspunkt der rotationssymmetrischen Struktur des Prägewerkzeugs innerhalb zumindest einer mäanderförmigen Aus- oder Einbuchtung des ringförmigen Kolbenbundes angeordnet.

Gemäß zumindest einer weiteren Ausführungsform mindestens ein Kreuzungspunkt der rotationssymmetrischen Struktur des Prägewerkzeugs in dem zumindest einen radial zum Kolben ausgerichteten Abschnitt der zumindest einen mäanderförmigen Aus- oder Einbuchtung des ringförmigen Kolbenbundes angeordnet.

Bevorzugt weist der Kolbenbund eine oder mehrere mäanderförmige Einbuchtungen auf. Die mäanderförmigen Einbuchtungen weisen dabei bevorzugt rechtwinklige Ecken auf, welche abgerundet sein können. Die erhabene rotationssymmetrische Struktur des Prägewerkzeugs ist bevorzugt ringförmig. Es ist dabei besonders vorteilhaft, wenn der Ringdurchmesser der erhabenen rotationssymmetrischen Struktur kleiner als der Ringdurchmesser des Kolbenbunds ohne Einbeziehung der mäanderförmigen Einbuchtungen, jedoch größer als der Ringdurchmesser eines gedachten Rings entlang der tangential verlaufenden Abschnitte der Einbuchtungen des Kolbenbunds ist. Dadurch befinden sich an jeder Einbuchtung zwei Kreuzungspunkte der erhabenen rotationssymmetrischen Struktur des Prägewerkzeugs und des Kolbenbunds, und zwar jeweils in den radial angeordneten Abschnitten des Kolbenbunds einer Einbuchtung. Dabei ist es besonders vorteilhaft, wenn der Ringdurchmesser der erhabenen rotationssymmetrischen Struktur des Prägewerkzeugs zwar kleiner als der Ringdurchmesser des Kolbenbunds ist, aber dennoch so groß ist, dass die erhabene rotationssymmetrische Struktur des Prägewerkzeugs an ihrer Außenseite, bezogen auf den Ringmittelpunkt, entlang des gesamten Ringumfangs, aber außerhalb der Einbuchtungen, mit einem Teilbereich der Ringbreite auf einem Teilbereich der Ringbreite an der Innenseite, bezogen auf den Ringmittelpunkt, des Kolbenbunds aufliegt und diesen ebenfalls in eine flachere Form druckumformt.

Im Falle von mäanderförmigen Ausbuchtungen des Kolbenbunds ist der Rjngdurchmesser der erhabenen rotationssymmetrischen Struktur vorteilhafter Weise größer als der Ringdurchmesser des Kolbenbunds ohne Einbeziehung der mäander-förmigen Ausbuchtungen, jedoch kleiner als der Ringdurchmesser eines gedachten Rings entlang der tangential verlaufenden Abschnitte der Ausbuchtungen des Kolbenbunds. Dadurch befinden sich ebenfalls an jeder Ausbuchtung zwei Kreuzungspunkte der erhabenen rotationssymmetrischen Struktur des Prägewerkzeugs und des Kolbenbunds, und zwar jeweils in den radial angeordneten Abschnitten des Kolbenbunds einer Ausbuchtung.

Die erfindungsgemäße Aufgabe wird alternativ zur Erfindung gelöst durch einen Kolben eines hydraulischen oder pneumatischen Dämpfers, welcher an einem Kolbengleitaggregat angeordnet werden kann. Das Kolbengleitaggregat ist entlang seiner Längsachse in einem Zylinder bewegbar und der Kolben umfasst einen scheibenförmigen Grundkörper, wobei der Kolben dazu geeignet und bestimmt ist, zwei Bereiche des mit einem Medium gefüllten Zylinders gegeneinander abzudichten.

Die Alternative zur Erfindung ist dadurch gekennzeichnet, dass der Kolben einen ringförmigen Kolbenbund umfasst, welcher mindestens eine äußere Wandung und mindestens eine innere Wandung aufweist und die mindestens eine innere Wandung radial von der mindestens einen äußeren Wandung beabstandet ist, wobei die mindestens eine innere Wandung und die mindestens eine äußere Wandung segmentartige Aussparungen aufweisen und die Aussparungen der mindestens einen inneren Wandung und die Aussparungen der mindestens einen äußeren Wandung entlang des Umfangs des Kolbens gegeneinander versetzt angeordnet sind, so dass die Aussparungen und der Zwischenraum zwischen der mindestens einen inneren und mindestens einen äußeren Wandung von dem Medium durchströmbar sind.

Dabei ist es denkbar, dass der Dämpfer als hydraulischer oder auch als pneumatischer Dämpfer (beispielsweise als Gasdruckfeder), in Einrohr- oder Zweirohrbauweise, oder in jeder anderen, dem Fachmann bekannten Dämpferbauart ausgeführt ist. Der Dämpfer umfasst dabei zumindest einen Zylinder, einen Kolben, ein Kolbengleitaggregat, ein Dichtelement und ein Medium. Das Medium befindet sich im Zylinder. Der Kolben ist an einem Ende des Kolbengleitaggregats angeordnet. An diesem Ende ist ebenfalls das Dichtelement angeordnet. Das Kolbengleitaggregat ist dabei zumindest teilweise im Zylinder und somit im Medium angeordnet, zumindest aber mit dem Ende an welchem der Kolben befestigt ist. Dabei teilt der Kolben zwei mit dem Medium gefüllte Bereiche des Zylinders voneinander. Das Kolbengleitaggregat und der daran angeordnete Kolben sind entlang der Kolbengleitaggregatslängsachse im Zylinder bewegbar. Das Medium ist bevorzugt ein Öl oder Gas. Ist das Medium ein Öl, ist der Zylinder bevorzugt nicht vollständig mit dem Öl gefüllt und das übrige Volumen mit einem Gas ausgefüllt.

Der Kolben weist einen scheibenförmigen Grundkörper auf, dessen Durchmesser kleiner als der Innendurchmesser des Zylinders ist. Weiterhin weist der Kolben eine Dicke in Richtung der Kolbengleitaggregatslängsachse auf. Andere Formen des Kolbens sind jedoch ebenfalls denkbar. Außerdem umfasst der Kolben an der Ober- oder Unterseite einen Kolbenbund. Der Kolbenbund ist bevorzugt als ringförmige erhabene Struktur ausgeführt. Bevorzugt weist der Kolbenbund parallel zur Oberfläche des scheibenförmigen Grundkörpers eine ebene Oberfläche auf. Diese Oberfläche ist bevorzugt an einer Dichtgegenfläche des Dichtelements angeordnet. Damit dichtet der Kolbenbund die zwei Bereiche des Zylinders, welche durch den Kolben voneinander getrennt werden, gegeneinander. ab. Dabei ist der eine Bereich fluidisch mit dem Bereich an der Innenseite (bezogen auf den Ringmittelpunkt des ringförmigen Kolbenbunds) des Kolbenbunds und der andere Bereich fluidisch mit dem Bereich an der Außenseite des Kolbenbunds verbunden.

Der Kolbenbund ist bevorzugt ringförmig. Der Kolbenbund umfasst bevorzugt eine innere und eine äußere Wandung. Die innere sowie die äußere Wandung weisen jeweils eine bestimmte Wanddicke (auch als Ringbreite bezeichnet) auf. Die äußere sowie auch die innere Wandung weisen Aussparungen entlang des Umfangs des Kolbenbunds auf. An diesen Aussparungen ist der Kolbenbund bevorzugt unterbrochen. Somit ist an diesen Stellen kein Kolbenbund vorhanden, sondern nur der scheibenförmige Grundkörper. Weiterhin ist es denkbar, dass an den Aussparungen der Kolbenbund nicht gänzlich unterbrochen ist, sondern lediglich soweit abgeflacht oder derart ausgeformt ist, dass die Oberfläche des Kolbenbunds nicht bis an die Dichtgegenfläche reicht. Die Aussparungen der äußeren und inneren Wandung sind bevorzugt versetzt zueinander angeordnet. Das heißt, dass an der Stelle des Kolbenbunds bezogen auf den Umfang, an welcher die äußere Wandung eine Aussparung aufweist, die innere Wandung gerade keine Aussparung aufweist und umgekehrt. Anders ausgedrückt weist der Kolben in jeder radialen Richtung vom Kolbenmittelpunkt zum Kolbenrand zumindest eine oder zumindest zwei Wandungen auf.

Weiterhin ist es vorteilhaft, wenn zwischen den Stellen einer Aussparung in der äußeren Wandung und einer Aussparung in der inneren Wandung ein Bereich des Kolbenbunds bezogen auf den Umfang angeordnet ist, in welchem weder die innere noch die äußere Wandung eine Aussparung aufweisen. In diesem Bereich kommt es damit zu einer Überlappung der Wandungen bezogen auf den Umfang des Kolbenbunds. Dabei ist es denkbar, dass im Bereich der Überlappung der Zwischenraum zwischen den Wandungen zumindest teilweise mit einem in eine abgeflachtere Form umgeformten Kolbenbund ausgefüllt ist. Weiterhin ist es denkbar, dass die Aussparungen eine größere Erstreckung bezogen auf den Umfang als die Wandung selbst aufweisen. In der vorliegenden Ausführungsform sind die Aussparungen der äußeren Wandung bevorzugt klein bezogen auf den Umfang. In der vorliegenden Ausführungsform ist es weiterhin bevorzugt, wenn die Aussparungen der inneren Wandung groß bezogen auf den Umfang ausgeführt sind. Insbesondere ist es vorteilhaft, wenn die Aussparungen der inneren Wandung bezogen auf den Umfang des Kolbenbunds eine größere Erstreckung als die innere Wandung selbst aufweisen. Weiterhin ist es jedoch denkbar, dass die Aussparungen der äußeren Wandung bezogen auf den Umfang des Kolbenbunds eine größere Erstreckung als die äußere Wandung selbst aufweisen und die Aussparungen der inneren Wandung klein bezogen auf den Umfang sind. Auch ist es denkbar, dass der Kolbenbund mehr als zwei Wandungen aufweist. Dabei ist es denkbar, dass alle Wandungen Aussparungen aufweisen, welche versetzt zueinander bezogen auf den Umfang des Kolbenbunds oder auch nicht versetzt zueinander oder auch zumindest teilweise versetzt zueinander angeordnet sind.

Gemäß zumindest einer weiteren Ausführungsform sind die Aussparungen und der Zwischenraum zwischen der mindestens einen inneren und mindestens einen äußeren Wandung des Kolbenbunds von einem Medium durchströmbar und definieren somit einen Strömungspfad des Mediums.

Durch die zuvor beschriebenen, versetzt angeordneten Aussparungen entsteht somit ein Strömungspfad aus dem inneren des ringförmigen Kolbenbunds in einen Bereich außerhalb des ringförmigen Kolbenbunds. Dabei dichtet der Kolbenbund die zwei Bereiche des Zylinders, welche durch den Kolben voneinander getrennt werden, nicht mehr vollständig gegeneinander ab, sondern verbindet beide Bereiche mit Hilfe des Strömungspfads. Dieser Strömungspfad ist im Sinne des Kanalquerschnitts bevorzugt klein gegenüber dem Durchmesser des Zylinders. Dabei ist der Kanalquerschnitt bevorzugt durch den Raumanteil des in eine abgeflachtere Form umgeformten Kolbenbunds im Zwischenraum zwischen den Wandungen einstellbar. Der Kanalquerschnitt ist somit bevorzugt von der Höhe der erhabenen rotationssymmetrischen Struktur des Prägewerkzeugs, welche die Höhe des umgeformten Kolbenbunds bestimmt, einstellbar. Es ist daher denkbar, durch Austauschen des Prägewerkzeugs gegen ein Prägewerkzeug mit einer erhabenen rotationssymmetrischen Struktur, welche eine andere Höhe aufweist, einen anderen Kanalquerschnitt in den Kolben einzuprägen. Weiterhin ist es denkbar, dass die Höhe der erhabenen rotationssymmetrischen Struktur veränderbar ist. So sind verschiedene Kanalquerschnitte mit einem Werkzeug formbar.

Der Strömungspfad stellt somit den zu Anfangs beschriebenen Bypass des Dämpfers dar. Der Strömungspfadquerschnitt bedingt somit die Progressivität der Dämpferkennlinie. Bei axialer Betätigung des Kolbengleitaggregats mit daran angeordnetem Kolben, wird somit der Kolben entlang der Längsachse des Kolbengleitaggregats im Zylinder bewegt. Dabei strömt das Medium durch zumindest einen Strömungspfad im Kolbenbund des Kolbens aus dem einen Bereich in den anderen Bereich des Zylinders.

Gemäß zumindest einer weiteren Ausführungsform weist der Strömungspfad des Mediums mindestens einen gekrümmt verlaufenden Abschnitt auf.

Bekannte Kolben weisen häufig Bypässe mit radialer Ausrichtung auf. Dies bedeutet, dass die Bypässe in Bezug auf den scheibenförmigen Grundkörper des Kolbens in einer radialen Richtung vom Medium entlang einer Gerade durchströmbar sind. Häufig besitzt der Kolbenbund in diesen Fällen lediglich eine Wandung mit Aussparungen. Dabei stellen die Aussparungen direkt die Bypässe dar und das Medium strömt in radialer Richtung gradlinig aus dem einen Bereich des Zylinders, welcher fluidisch mit dem Bereich an der Innenseite des ringförmigen Kolbenbunds verbunden ist, in den anderen Bereich des Zylinders, welcher mit dem Bereich an der Außenseite des ringförmigen Kolbenbunds verbunden ist, oder umgekehrt. Im Gegensatz dazu weist der erfindungsgemäße Kolben bevorzugt einen Strömungspfad auf, welcher zumindest einen gekrümmt verlaufenden Abschnitt aufweist. Die bedeutet, dass das Medium den Bypass entlang des Strömungspfads nicht gradlinig durchströmt sondern um zumindest eine Kurve fließt. Bevorzugt ist der Strömungspfad mit dem gekrümmt verlaufenden Abschnitt in der Ebene parallel zur Oberfläche des scheibenförmigen Grundkörpers des Kolbens angeordnet. Bevorzugt beschreibt der Strömungspfad im gekrümmt verlaufenden Abschnitt eine Kurve von wenigstens 60, 70 oder 80 und höchstens 100, 110 oder 120 Grad, bevorzugt jedoch 90 Grad. Es ist jedoch auch jeder andere Winkelwert, welcher nicht 0 Grad ist, denkbar.

Gemäß zumindest einer weiteren Ausführungsform ist der Strömungspfad des Mediums labyrinthförmig.

Labyrinthförmig bedeutet im Zusammenhang mit der vorliegenden Erfindung, dass der Strömungspfad zumindest eine, bevorzugt zwei, oder auch mehr als zwei Umlenkungen aufweist. Insbesondere ist bei Hineinblicken in einen labyrinthförmig verlaufenden (Strömungs-) Pfad der Austritt oder Ausgang nicht vom Eintritt oder Eingang aus sichtbar. Die Umlenkungen bezeichnen dabei einen Abschnitt, in welchem die Strömung des Mediums durch die Begrenzung des Strömungspfads von einer gradlinigen Strömungsrichtung abgelenkt wird. Bevorzugt stellen die Umlenkungen die zuvor beschriebenen, gekrümmt verlaufenden Abschnitte dar.

Gemäß zumindest einer weiteren Ausführungsform ist die Strömungsrichtung des Mediums in mindestens einem Ein- und/oder Austrittspunkt zumindest eines Strömungspfades oder einem beliebigen Punkt entlang zumindest eines Strömungspfades tangential in Bezug auf den Kolben.

Wie zuvor beschrieben, weisen bekannte Kolben häufig Bypässe mit radialer Ausrichtung auf. Dies bedeutet, dass die Bypässe in radialer Richtung vom Medium durchströmbar sind. Im Gegensatz hierzu weist der erfindungsgemäße Kolben zumindest einen Punkt, bevorzugt aber einen Bereich entlang zumindest eines Strömungspfades auf, in welchem die Strömungsrichtung tangential, also parallel zum Umfang des ringförmigen Kolbenbunds, ist. Bevorzugt ist dieser Punkt oder Bereich direkt am Ein- und/oder Austrittspunkt des zumindest einen Strömungspfades angeordnet. Bevorzugt wird dieser tangential verlaufende Bereich des Strömungspfades von der inneren und äußeren Wandung des ringförmigen Kolbenbunds begrenzt.

Der tangential verlaufende Bereich des Strömungspfades ist daher bevorzugt in einem Bereich angeordnet, in welchem weder die innere noch die äußere Wandung eine Aussparung aufweisen. Der tangential verlaufende Bereich des Strömungspfades ist daher bevorzugt in einem Bereich angeordnet, in welchem die Wandungen bezogen auf den Umfang des Kolbenbunds eine Überlappung aufweisen. Die Strömung des Mediums bei axialer Betätigung des Kolbengleitaggregats mit daran angeordnetem Kolben verläuft bevorzugt radial auswärts (bezogen auf den scheibenförmigen Grundkörper des Kolbens) bis das Medium auf den Kolbenbund trifft. Am Kolbenbund tritt das Medium in den Strömungspfad durch zumindest einen Bypass ein. Der Kolben weist bevorzugt drei Bypässe auf. Dabei umströmt das Medium aus einem Bereich des Zylinders kommend, welcher fluidisch mit einem Bereich auf der Innenseite des ringförmigen Kolbenbunds verbunden ist, ein Segment der inneren Wandung durch die umfänglich links und rechts anschließenden Aussparungen der inneren Wandung. Der Strömungspfad weist direkt daran anschließend einen tangential verlaufenden Abschnitt auf, welcher zwischen der inneren und äußeren Wandung, also in dem überlappenden Bereich der Wandungen, verläuft. Der Strömungspfad weist somit einen gekrümmt verlaufenden Abschnitt direkt am Eintritt des Strömungspfades auf, in welchem das Medium die Strömungsrichtung von radial in tangential (bezogen auf den scheibenförmigen Grundkörper des Kolbens) ändert.

Anschließend an den Bereich mit tangentialer Strömungsrichtung ist ein anderer gekrümmt verlaufender Bereich des Strömungspfades angeordnet, in welchem das Medium die Strömungsrichtung von tangential in radial (bezogen auf den scheibenförmigen Grundkörper des Kolbens) ändert. Daran anschließend verläuft der Strömungspfad radial durch eine Aussparung der äußeren Wandung aus dem ringförmigen Kolbenbund heraus. Aus der Aussparung der äußeren Wandung austretend, strömt das Medium somit in den anderen Bereich des Zylinders, welcher fluidisch mit einem Bereich auf der Außenseite des ringförmigen Kolbenbunds verbunden ist.

Gemäß zumindest einer weiteren Ausführungsform sind im Dämpfer am Kolbengleitaggregat (2) zumindest zwei Kolben (1) angeordnet.

Wie bereits zuvor beschrieben, besteht die Möglichkeit das Dichtelement schwimmend am Kolben anzuordnen. In diesem Fall wird das Dichtelement bei Betätigung des Dämpfers in eine (Hin-)Richtung durch die Druckdifferenz zwischen den beiden Bereichen des Zylinders an den Kolben angepresst und das Medium kann nur durch den Strömungspfad aus dem einen Bereich in den anderen Bereich des Zylinders strömen. Bei Betätigung des Dämpfers in die andere (Rück-)Richtung wird das Dichtelement vom Kolben weggepresst auf Grund der nun andersherum bestehenden Druckdifferenz. In diesem Fall kann das Medium durch einen wesentlich größeren Strömungsquerschnitt zurück in den ersten Bereich strömen. Der Dämpfer lässt sich somit in diese zweite (Rück-)Richtung sehr viel leichter betätigen als in die erste (Hin)Richtung. Es ist dabei denkbar, dass der Kolben und das schwimmende Dichtelement umgekehrt am Kolbengleitaggregat angeordnet sind, sodass die erste (Hin-)Richtung leichter zu betätigen ist als die zweite (Rück-)Richtung. Darüber hinaus ist es ebenfalls denkbar, dass zwei Kolben und auch ein oder mehrere schwimmende Dichtelemente am Kolbengleitaggregat angeordnet werden. Dabei werden die Kolben bevorzugt mit der Seite, auf welcher ein Strömungspfad eingeprägt wurde, zueinander angeordnet. An der Seite, an welcher ein Strömungspfad eingeprägt wurde, ist bevorzugt jeweils ein Dichtelement schwimmend angeordnet, wobei bei zwei Kolben in Anordnung mit zueinander weisendem Strömungspfad ein schwimmendes Dichtelement ausreichend sein kann. Auf die Art und Weise entspricht das Dämpfungsverhalten der Hinrichtung dem der Rückrichtung. Hier ist es außerdem denkbar, dass die beiden Kolben einen nicht gleichen Strömungsquerschnitt aufweisen. In diesem Fall ist das Dämpfungsverhalten von Hin- und Rückrichtung unterschiedlich und ist insbesondere durch Auswahl der Strömungsquerschnitte an verschiedenste Anforderungen anpassbar. In diesem Fall ist das Dämpfungsverhalten der Hinrichtung und Rückrichtung völlig frei voneinander einstellbar.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen. In den Figuren zeigen:
- Fig. 1: eine Übersichtsdarstellung des zur Erfindung alternativen Kolbens angeordnet in einem Dämpfer in einer bevorzugten Ausführungsform;
- Fig. 2: eine perspektivische Darstellung des Kolbens in einer bevorzugten Ausführungsform;
- Fig. 3a: eine schematische Darstellung des Prägewerkzeugs gemäß einer bevorzugten Ausführungsform in Aufsicht;
- Fig. 3b: eine schematische Darstellung des Prägewerkzeugs gemäß einer bevorzugten Ausführungsform als Schnitt entlang der Linie A-A (s. Fig. 3a);
- Fig. 4: eine schematische Darstellung des Kolbens und der erhabenen rotationssymmetrischen Struktur des Prägewerkzeugs gemäß einer bevorzugten Ausführungsform in Aufsicht;
- Fig. 5: eine schematische Darstellung des Kolbens und des Prägewerkzeugs gemäß einer bevorzugten Ausführungsform als Schnitt entlang der Linie B-B (s. Fig. 4).

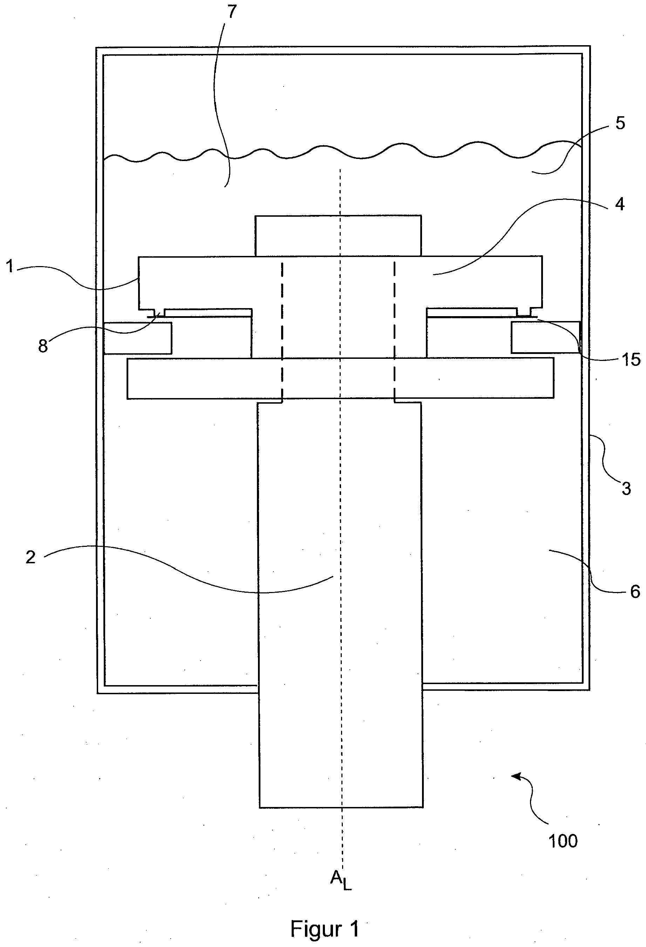

In der Figur 1 ist ein Kolben 1 eines hydraulischen oder pneumatischen Dämpfers 100 schematisch dargestellt, welcher an einem Kolbengleitaggregat 2 angeordnet werden kann. Das Kolbengleitaggregat ist entlang seiner Längsachse AL in einem Zylinder 3 bewegbar und der Kolben 1 umfasst einen scheibenförmigen Grundkörper 4, wobei der Kolben 1 dazu geeignet und bestimmt ist, zwei Bereiche 5, 6 des mit einem Medium 7 gefüllten Zylinders 3 gegeneinander abzudichten.

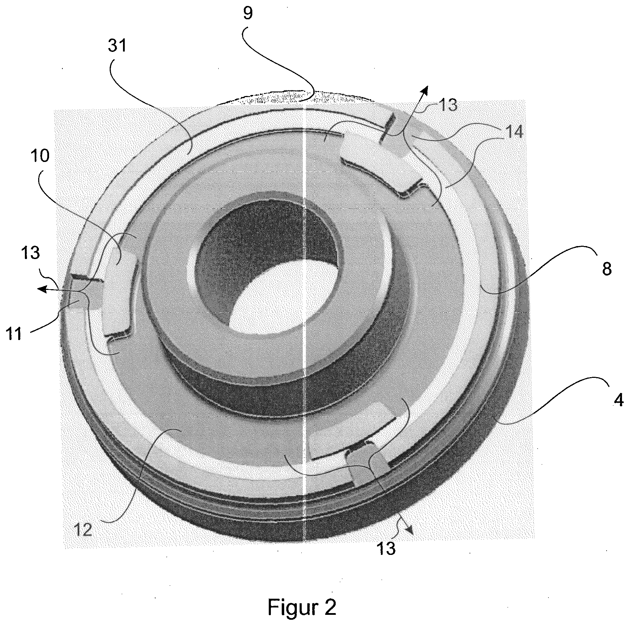

Die Alternative zur Erfindung ist dadurch gekennzeichnet, dass der Kolben 1 einen ringförmigen Kolbenbund 8 umfasst, welcher mindestens eine äußere Wandung 9 und mindestens eine innere Wandung 10 aufweist und die mindestens eine innere Wandung 10 radial von der mindestens einen äußeren Wandung 9 beabstandet ist, wobei die mindestens eine innere Wandung 10 und die mindestens eine äußere Wandung 9 segmentartige Aussparungen 11, 12 aufweisen und die Aussparungen der mindestens einen inneren Wandung 12 und die Aussparungen der mindestens einen äußeren Wandung 11 entlang des Umfangs des Kolbens 1 gegeneinander versetzt angeordnet sind, so dass die Aussparungen 11, 12 und der Zwischenraum zwischen der mindestens einen inneren und mindestens einen äußeren Wandung 9, 10 von dem Medium 7 durchströmbar sind (nicht in Fig. 1 dargestellt, s. Fig. 2).

Der Dämpfer 100 umfasst dabei zumindest einen Zylinder 3, einen Kolben 1, ein Kolbengleitaggregat 2, ein Dichtelement 15 und ein Medium 7. Das Medium 7 befindet sich im Zylinder 3. Der Kolben 1 ist bevorzugt an einem Ende des Kolbengleitaggregats 2 angeordnet. An diesem Ende ist ebenfalls das Dichtelement 15 angeordnet. Das Kolbengleitaggregat 2 ist dabei zumindest teilweise im Zylinder 3 und somit im Medium 7 angeordnet, zumindest aber mit dem Ende, an welchem der Kolben 1 befestigt ist. Dabei teilt der Kolben 1 zwei mit dem Medium 7 gefüllte Bereiche 5, 6 des Zylinders 3 voneinander. Das Kolbengleitaggregat 2 und der daran angeordnete Kolben 1 sind entlang der Kolbengleitaggregatslängsachse AL im Zylinder 3 bewegbar. Der Zylinder 3 ist bevorzugt nicht vollständig mit dem Medium 7, z. B. einem Öl, gefüllt und das übrige Volumen ist mit einem Gas ausgefüllt.

Der Kolben 1 weist einen scheibenförmigen Grundkörper 4 auf dessen Durchmesser kleiner als der Innendurchmesser des Zylinders 3 ist. Weiterhin weist der Kolben 1 eine Dicke in Richtung der Kolbengleitaggregatslängsachse AL auf. Außerdem umfasst der Kolben 1 an der Ober- und/oder Unterseite einen Kolbenbund 8. Der Kolbenbund 8 ist bevorzugt als ringförmige erhabene Struktur ausgeführt. Bevorzugt weist der Kolbenbund 8 parallel zur Oberfläche des scheibenförmigen Grundkörpers eine ebene Oberfläche auf. Diese Oberfläche ist bevorzugt an einer Dichtgegenfläche des Dichtelements 15 angeordnet. Damit dichtet der Kolbenbund die zwei Bereiche des Zylinders, welche durch den Kolben voneinander getrennt werden, gegeneinander ab. Dabei ist der eine Bereich fluidisch mit dem Bereich an der Innenseite (bezogen auf den Ringmittelpunkt des ringförmigen Kolbenbunds) des Kolbenbunds und der andere Bereich fluidisch mit dem Bereich an der Außenseite des Kolbenbunds verbunden.

Figur 2 zeigt eine perspektivische Darstellung des Kolbens 1. Der Kolbenbund 8 ist bevorzugt ringförmig. Der Kolbenbund 8 umfasst bevorzugt eine innere 10 und eine äußere Wandung 9. Die innere 10 sowie die äußere Wandung 9 weisen jeweils eine bestimmte Wanddicke (auch als Ringbreite bezeichnet) auf. Die äußere 9 sowie auch die innere Wandung 10 weisen Aussparungen 11, 12 entlang des Umfangs des Kolbenbunds 8 auf. An diesen Aussparungen 11, 12 ist der Kolbenbund 8 bevorzugt unterbrochen. Somit ist an diesen Stellen kein Kolbenbund 8 vorhanden, sondern nur der scheibenförmige Grundkörper 4. Weiterhin ist es denkbar, dass an den Aussparungen 11, 12 der Kolbenbund 8 nicht gänzlich unterbrochen ist, sondern lediglich soweit abgeflacht oder derart ausgeformt ist, dass die Oberfläche des Kolbenbunds 8 nicht bis an die Dichtgegenfläche des Dichtelements 15 reicht. Die Aussparungen 11, 12 der äußeren 9 und inneren Wandung 10 sind bevorzugt versetzt zueinander angeordnet.

Das heißt, dass an der Stelle des Kolbenbunds 8 bezogen auf den Umfang an welcher die äußere Wandung 9 eine Aussparung 11 aufweist, die innere Wandung 10 gerade keine Aussparung 12 aufweist und umgekehrt. Weiterhin ist es vorteilhaft, wenn zwischen den Stellen einer Aussparung 11 in der äußeren Wandung 9 und einer Aussparung 12 in der inneren Wandung 10 ein Bereich des Kolbenbunds 8 bezogen auf den Umfang angeordnet ist, in welchem weder die innere 10 noch die äußere Wandung 9 eine Aussparung 11, 12 aufweisen. In diesem Bereich kommt es damit zu einer Überlappung der Wandungen 9, 10 bezogen auf den Umfang des Kolbenbunds 8. Dabei ist es auch denkbar, dass die Aussparungen 11, 12 eine größere Erstreckung bezogen auf den Umfang als die Wandungen 9, 10 selbst aufweisen. In der vorliegenden Ausführungsform sind die Aussparungen 11 der äußeren Wandung 9 bevorzugt klein bezogen auf den Umfang. In der vorliegenden Ausführungsform ist es weiterhin bevorzugt, wenn die Aussparungen 12 der inneren Wandung 10 groß bezogen auf den Umfang ausgeführt sind. Insbesondere ist es vorteilhaft, wenn die Aussparungen 12 der inneren Wandung 10 bezogen auf den Umfang des Kolbenbunds 8 eine größere Erstreckung als die innere Wandung 10 selbst aufweisen. Weiterhin ist es jedoch denkbar, dass die Aussparungen 11 der äußeren Wandung 9 bezogen auf den Umfang des Kolbenbunds 8 eine größere Erstreckung als die äußere Wandung 9 selbst aufweisen und die Aussparungen 12 der inneren Wandung 10 klein bezogen auf den Umfang sind. Auch ist es denkbar, dass der Kolbenbund 8 mehr als zwei Wandungen aufweist. Dabei ist es denkbar, dass alle Wandungen Aussparungen aufweisen, welche versetzt zueinander bezogen auf den Umfang des Kolbenbunds 30 oder auch nicht versetzt zueinander oder auch zumindest teilweise versetzt zueinander angeordnet sind.

Die Aussparungen 11, 12 und der Zwischenraum zwischen der mindestens einen inneren und mindestens einen äußeren Wandung 9, 10 des Kolbenbunds 8 sind bevorzugt von einem Medium 7 durchströmbar und definieren somit einen Strömungspfad 13 des Mediums 7. Durch die zuvor beschriebenen, versetzt angeordneten Aussparungen 11, 12 entsteht somit ein Strömungspfad 13 aus dem inneren des ringförmigen Kolbenbunds 8 in einen Bereich außerhalb des ringförmigen Kolbenbunds 8. Dabei dichtet der Kolbenbund 8 die zwei Bereiche des Zylinders 5, 6, welche durch den Kolben voneinander getrennt werden, nicht mehr vollständig gegeneinander ab, sondern verbindet beide Bereiche mit Hilfe des Strömungspfads 13. Dieser Strömungspfad 13 ist im Sinne des Kanalquerschnitts bevorzugt klein gegenüber dem Durchmesser des Zylinders 3. Dieser Strömungspfad 13 stellt somit den zu Anfangs beschriebenen Bypass des Dämpfers 100 dar. Der Strömungspfadquerschnitt bedingt somit die Progressivität der Dämpferkennlinie. Bei axialer Betätigung des Kolbengleitaggregats 2 mit daran angeordnetem Kolben 1, wird somit der Kolben 1 entlang der Längsachse AL des Kolbengleitaggregats 2 im Zylinder 3 bewegt. Dabei strömt das Medium 7 durch zumindest einen Strömungspfad 13 im Kolbenbund 8 des Kolbens 1 aus dem einen Bereich 5 in den anderen Bereich 6 des Zylinders, oder umgekehrt.

Der Strömungspfad 13 des Mediums 7 weist bevorzugt mindestens einen gekrümmt verlaufenden Abschnitt 14 auf. Dies bedeutet, dass das Medium 7 den Bypass entlang des Strömungspfads 13 nicht gradlinig durchströmt, sondern um zumindest eine Kurve fließt. Bevorzugt ist der Strömungspfad 13 mit dem gekrümmt verlaufenden Abschnitt 14 in der Ebene parallel zur Oberfläche des scheibenförmigen Grundkörpers 4 des Kolbens 1 angeordnet. Bevorzugt beschreibt der Strömungspfad 13 im gekrümmt verlaufenden Abschnitt 14 eine Kurve von 90 Grad.

Der Strömungspfad 13 des Mediums 7 ist bevorzugt labyrinthförmig. Labyrinthförmig bedeutet im Zusammenhang mit der vorliegenden Erfindung, dass der Strömungspfad 13 zumindest eine, bevorzugt zwei, oder auch mehr als zwei Umlenkungen aufweist. Insbesondere ist bei hineinblicken in einen labyrinthförmig verlaufenden (Strömungs-) Pfad der Austritt oder Ausgang nicht vom Eintritt oder Eingang aus sichtbar. Die Umlenkungen bezeichnen dabei einen Abschnitt, in welchem die die Strömung des Mediums 7 durch die Begrenzung des Strömungspfads 13 von einer gradlinigen Strömungsrichtung abgelenkt wird. Bevorzugt stellen die Umlenkungen die zuvor beschriebenen, gekrümmt verlaufenden Abschnitte 14 dar.

Die Strömungsrichtung des Mediums 7 ist bevorzugt in mindestens einem Ein- und/oder Austrittspunkt zumindest eines Strömungspfades 13 oder einem beliebigen Punkt entlang zumindest eines Strömungspfades 13 tangential in Bezug auf den Kolben 1. Der erfindungsgemäße Kolben 1 weist zumindest einen Punkt, bevorzugt aber einen Bereich entlang zumindest eines
Strömungspfades 13 auf, in welchem die Strömungsrichtung tangential, also parallel zum Umfang des ringförmigen Kolbenbunds 8, ist. Bevorzugt ist dieser Punkt oder Bereich direkt am Ein- und/oder Austrittspunkt des zumindest einen Strömungspfades 13 angeordnet. Bevorzugt wird dieser tangential verlaufende Bereich des Strömungspfades 13 von der inneren 10 und äußeren Wandung 9 des ringförmigen Kolbenbunds 8 begrenzt. Der tangential verlaufende Bereich des Strömungspfades 13 ist daher bevorzugt in einem Bereich angeordnet, in welchem weder die innere 10 noch die äußere Wandung 9 eine Aussparung 11, 12 aufweisen. Der tangential verlaufende Bereich des Strömungspfades 13 ist daher bevorzugt in einem Bereich angeordnet, in welchem die Wandungen 9, 10 bezogen auf den Umfang des Kolbenbunds 8 eine Überlappung aufweisen. Die Strömung des Mediums 7 bei axialer Betätigung des Kolbengleitaggregats 2 mit daran angeordnetem Kolben 1 verläuft bevorzugt radial auswärts (bezogen auf den scheibenförmigen Grundkörper 4 des Kolbens 1), bis das Medium 7 auf den Kolbenbund 8 trifft. Am Kolbenbund 8 tritt das Medium 7 in den Strömungspfad 13 durch zumindest einen Bypass ein. Der Kolben 1 weist bevorzugt zwei oder drei Bypässe auf. Dabei umströmt das Medium 7 aus einem Bereich 6 des Zylinders 3 kommend, welcher fluidisch mit einem Bereich auf der Innenseite des ringförmigen Kolbenbunds 8 verbunden ist, ein Segment der inneren Wandung 10 durch die umfänglich links und rechts anschließenden Aussparungen 12 der inneren Wandung 10. Der Strömungspfad 13 weist direkt daran anschließend einen tangential verlaufenden Abschnitt auf, welcher zwischen der inneren 10 und äußeren Wandung 9, also in dem überlappenden Bereich der Wandungen 9, 10, verläuft. Der Strömungspfad 13 weist somit einen gekrümmt verlaufenden Abschnitt 14 direkt am Eintritt des Strömungspfades 13 auf, in welchem das Medium 7 die Strömungsrichtung von radial in tangential (bezogen auf den scheibenförmigen Grundkörper 4 des Kolbens 1) ändert. Anschließend daran ist ein anderer gekrümmt verlaufender Bereich 14 des Strömungspfades 13 angeordnet, in welchem das Medium 7 die Strömungsrichtung von tangential in radial (bezogen auf den scheibenförmigen Grundkörper 4 des Kolbens 1) ändert. Direkt daran anschließend verläuft der Strömungspfad 13 radial durch eine Aussparung 11 der äußeren Wandung 9 aus dem ringförmigen Kolbenbund 8 heraus. Aus der Aussparung 11 der äußeren Wandung 9 austretend, strömt das Medium 7 somit in den anderen Bereich 5 des Zylinders 3, welcher 30 fluidisch mit einem Bereich auf der Außenseite des ringförmigen Kolbenbunds 8 verbunden ist. Eine umgekehrte Strömungsrichtung ist ebenfalls denkbar.

Zur Herstellung eines Kolbens 1, wird gemäß dem Verfahren nach Anspruch 1 ein Strömungspfad 13 in den Kolben
1 eingepresst. Dieser Schritt erfolgt mittels eines Prägewerkzeugs 20, welches eine erhabene und rotationssymmetrische Struktur 21 aufweist.

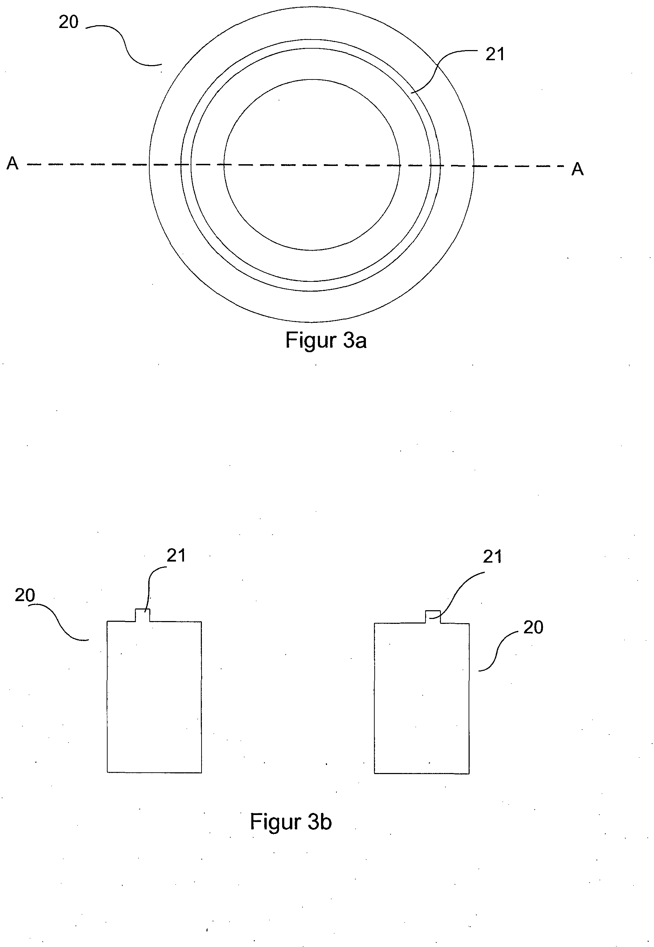

Das Prägewerkzeug 20 ist in den Figuren 3a (Aufsicht) und 3b (Schnitt entlang A-A) schematisch dargestellt. Im entsprechenden Verfahrensschritt wird die Oberfläche des zuvor entgrateten Kolbens 1 mit Hilfe eines Prägewerkzeugs 20 geglättet. Dafür wird das Prägewerkzeug 20 mit einer definierten Kraft und/oder einem definierten Maß an den zu glättenden Oberflächen flächig gegen den Kolben 1 gepresst. Darüber hinaus weist das Prägewerkzeug 20 eine erhabene rotationssymmetrische Struktur 21 auf, welche beim Pressen des Prägewerkzeugs 20 gegen den Kolben 1 in den Kolben 1 eingeprägt wird. Dabei entsteht eine negative Abformung der erhabenen rotationssymmetrischen Struktur 21 in der Kolbenoberfläche. Der Kolben 1 wird dabei mit Hilfe des Prägewerkzeugs 20 druckumgeformt. Es ist allerdings auch denkbar, dass in diesem Verfahrensschritt keine Glättung der Oberfläche des Kolbens 1 durch das Prägewerkzeug 20 erfolgt, sondern das Prägewerkzeug 20 lediglich die erhabene rotationssymmetrische Struktur 21 in den Kolben 1 prägt.

Das Prägewerkzeug 20 ist bevorzugt als Kalibrierstempel ausgeführt. Der Kalibrierstempel ist bevorzugt rotationssymmetrisch ausgeformt, sodass dieser regelmäßig präzise nachbearbeitet werden kann, um die geringe Fertigungstoleranz, bevorzugt im Bereich von IT 3 bis IT 4 (Chargenstreuung) und IT 4 bis IT 6 (chargenübergreifend), zu wahren.

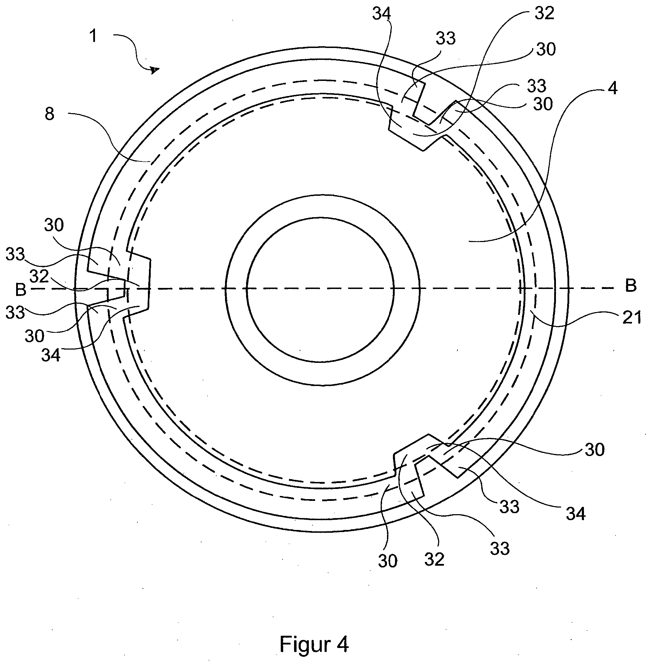

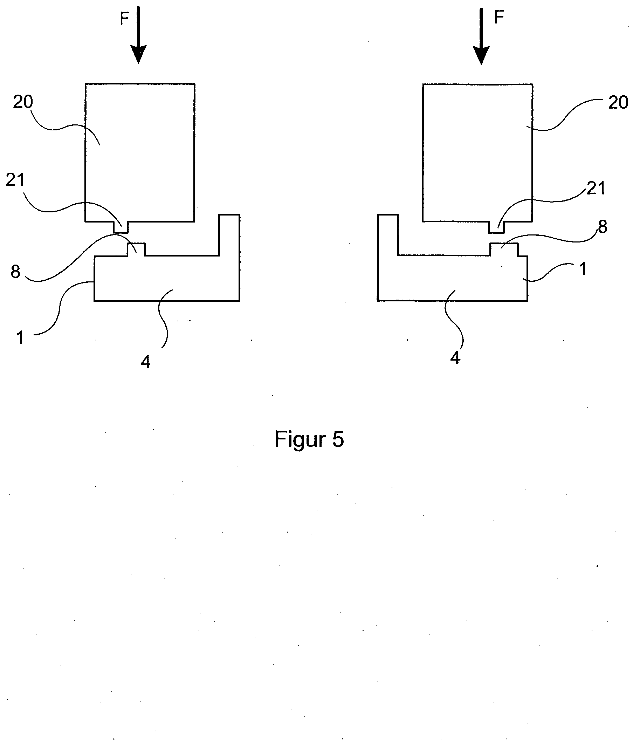

Die erhabene, rotationssymmetrische Struktur 21 des Prägewerkzeugs 20 weist beim Aufsetzen auf den Kolben 1, welcher einen ringförmigen Kolbenbund 8 umfasst, mindestens einen Kreuzungspunkt 30 mit dem ringförmigen Kolbenbund 8 auf. Bei Aufsetzen des Prägewerkzeugs 20 auf die Kolbenoberfläche, welches in den Figuren 4 und 5 (Schnitt entlang B, Fig. 4) schematisch dargestellt ist, ist das Prägewerkzeug 20 derart zum Kolben 1 angeordnet, dass die erhabene rotationssymmetrische Struktur 21 des Prägewerkzeugs 20 und der ringförmige Kolbenbund 8 des Kolbens 1 an zumindest einer Stelle aufeinander zu liegen kommen und zumindest einen Kreuzungspunkt 30 aufweisen. Am Kreuzungspunkt 30 kreuzt die rotationssymmetrische Struktur 21 des Prägewerkzeugs 20 dabei den Kolbenbund 8 von der dem Kolbenmittelpunkt zugewandten Seite des Kolbenbunds 8 zur dem Kolbenmittelpunkt abgewandten Seite des Kolbenbunds 8, oder auch von der dem Kolbenmittelpunkt abgewandten Seite des Kolbenbunds 8 zur dem Kolbenmittelpunkt zugewandten Seite des Kolbenbunds 8.

Das Prägewerkzeug 20 wird nun in der zuvor beschriebenen Anordnung zum Kolben 21 gegen den Kolben 1 gepresst oder der Kolben 1 gegen das Prägewerkzeug 20 gepresst, wobei der Anpressdruck bzw. das Maß in beiden Fällen genau einstellbar ist. Durch das Einpressen der erhabenen, rotationssymmetrischen Struktur 21 des Prägewerkzeugs 20 in den Kolben 1 an mindestens einem Kreuzungspunkt 30 der erhabenen, rotationssymmetrischen Struktur 21 des Prägewerkzeugs 20 mit dem ringförmigen Kolbenbund 8, wird der ringförmige Kolbenbund 8 zumindest teilweise in eine abgeflachtere Form 31 druckumgeformt. Während des Einpressvorgangs werden nun die erhabene rotationssymmetrische Struktur 21 des Prägewerkzeugs 20 und der ringförmige Kolbenbund 8 an zumindest dem mindestens einen Kreuzungspunkt 30 gegeneinander gepresst. Dabei drückt die erhabene rotationssymmetrische Struktur 21 des Prägewerkzeugs 20 den ringförmigen Kolbenbund 8 an zumindest dem mindestens einen Kreuzungspunkt 30 in eine abgeflachtere und/oder vertiefte Form 31, sodass der ringförmige Kolbenbund 8 mindestens an dieser Stelle in eine flachere Form druckumgeformt wird. Der ringförmige Kolbenbund 8 wird somit an zumindest einer Stelle durch die erhabene rotationssymmetrische Struktur 21 des Prägewerkzeugs 20 abgeplattet. Dies impliziert, dass die Höhe des Kolbenbundes 8, bezogen auf die Richtung senkrecht zur durch den scheibenförmigen Grundkörper 4 definierten Ebene und parallel zum Kolbengleitaggregat 2 (wenn der Kolben 1 an dem Kolbengleitaggregat 2 angeordnet ist) an der abgeplatteten Stelle reduziert ist.

Durch diese Abplattung des ringförmigen Kolbenbunds 8 liegt die Oberfläche des Kolbenbunds 8 bei Anordnung an einem Dichtelement 15 im Bereich der Abplattung nicht mehr an der Dichtgegenfläche an. Am Kreuzungspunkt 30, an dem die Abplattung des Kolbenbunds 8 sich von der dem Kolbenmittelpunkt zugewandten Seite des Kolbenbunds 8 zur dem Kolbenmittelpunkt abgewandten Seite des Kolbenbunds 8 verläuft, liegt die Oberfläche des Kolbenbunds 8 somit gar nicht an der Dichtgegenfläche des Dichtelements 15 an, wodurch ein Strömungspfad 13 für das Medium 7 von einem der zwei Bereiche 6 des mit einem Medium 7 gefüllten Zylinders 3, welche durch den Kolben 1 gegeneinander abgedichtet werden, in den anderen Bereich 5 entsteht. Dieser Strömungspfad 13 stellt den zuvor beschriebenen Bypass dar, welcher die Dämpferkennlinie des Dämpfers 100 bedingt. Die Verringerung der Höhe des Kolbenbundes 8 an der zumindest einen abgeplatteten Stelle ist dabei so groß, dass ein entlang des Strömungspfads 13 vom Medium 7 durchströmbarer Bypass entsteht.

Durch die Fertigung des Bypasses mit einem Prägewerkzeug 20, insbesondere mit einem Kalibrierstempel, kann eine reduzierte Fertigungstoleranz im Bereich von IT 3 bis IT 4 (Chargenstreuung) und IT 4 bis IT 6 (chargenübergreifend) erreicht werden und so ein Kolben 1 entsprechend der erfindungsgemäßen Aufgabe in industrieller Serienfertigung hergestellt werden.

Der ringförmige Kolbenbund 8 weist bevorzugt zumindest eine mäanderförmige Aus- und/oder Einbuchtung 32 auf, welche bevorzugt mindestens einen radial 33 und einen tangential 34 zum Kolben 1 ausgerichteten Abschnitt aufweist. Im Falle einer mäanderförmigen Einbuchtung 32 verläuft der ringförmige Kolbenbund 8 nicht völlig kreisförmig auf der Oberfläche des Kolbens 8, sondern beschreibt zu Beginn der Einbuchtung 32 eine erste Kurve in Richtung des Mittelpunkts der Kolbenoberfläche, auf welcher der Kolbenbund 8 angeordnet ist, mit einem daran anschließenden geraden Abschnitt und weist damit einen Kolbenbundabschnitt 33 auf, welcher radial in Bezug auf den scheibenförmigen Grundkörper 4 des Kolbens 1 angeordnet 15 ist. Im weiteren Verlauf der Einbuchtung 32 weist der Kolbenbund 8 eine zweite Kurve in die entgegengesetzte Richtung auf, ebenfalls mit einem daran anschließenden geraden Abschnitt, und weist damit einen Kolbenbundabschnitt 34 auf, welcher tangential in Bezug auf den scheibenförmigen Grundkörper 4 des Kolbens 1 angeordnet ist. Daran anschließend weist der Kolbenbund 8 eine dritte Kurve in dieselbe Richtung wie die zweite Kurve auf, an welche ebenfalls ein gerader Abschnitt anschließt. Die Einbuchtung 32 weist damit einen zweiten Kolbenbundabschnitt 33 auf, welcher radial in Bezug auf den scheibenförmigen Grundkörper 4 des Kolbens 1 angeordnet ist. An diesen zweiten radialen Abschnitt 33 schließt sich eine vierte Kurve an, welche in dieselbe Richtung wie die erste Kurve verläuft, sodass der Kolbenbund 8 nun weiter entlang der kreisförmigen Grundform verläuft. Im Falle einer Ausbuchtung ist der Kolbenbund ähnlich dieser Beschreibung geformt mit dem Unterschied, dass die Kurven in die jeweils andere Richtung führen bzw., dass der erste radial angeordnete Abschnitt 33 des Kolbenbunds vom Mittelpunkt der Kolbenoberfläche, auf welcher der Kolbenbund 8 angeordnet ist, wegführt. Weiterhin ist es denkbar, dass der Kolbenbund 8 statt Kurven Ecken im Bereich der Ein- oder Ausbuchtung 32 aufweist.

Die zuvor beschriebene, bevorzugte Ein- oder Ausbuchtung 32 weist eine eckige "U"-Form mit oder ohne abgerundeten Ecken auf. Es sind jedoch anders geformte Ein- oder Ausbuchtungen 32 denkbar, beispielsweise eine "V"-Form oder eine halbrunde Form, oder jede andere, dem Fachmann bekannte Form, mit welcher die erhabene rotationssymmetrische Struktur 21 des Prägewerkzeugs 20 den Kolbenbund 8 an zumindest einer Stelle kreuzt.

Bevorzugt ist mindestens ein Kreuzungspunkt 30 der rotationssymmetrischen Struktur 21 des Prägewerkzeugs 20 innerhalb zumindest einer mäanderförmigen Aus- oder Einbuchtung 32 des ringförmigen Kolbenbundes 8 angeordnet. Des Weiteren ist bevorzugt mindestens ein Kreuzungspunkt 30 der rotationssymmetrischen Struktur 21 des Prägewerkzeugs 20 in dem zumindest einen radial zum Kolben 1 ausgerichteten Abschnitt 33 der zumindest einen mäanderförmigen Aus- oder Einbuchtung 32 des ringförmigen Kolbenbundes 8 angeordnet. Die mäanderförmigen Einbuchtungen 32 weisen dabei bevorzugt rechtwinklige Ecken auf, welche abgerundet sein können. Die erhabene rotationssymmetrische Struktur 21 des Prägewerkzeugs 20 ist bevorzugt ringförmig. Es ist dabei besonders vorteilhaft, wenn der Ringdurchmesser der erhabenen rotationssymmetrischen Struktur 21 kleiner als der Ringdurchmesser des Kolbenbunds 8 ohne Einbeziehung der mäanderförmigen Einbuchtungen 32, jedoch größer als der Ringdurchmesser eines gedachten Rings entlang der tangential verlaufenden Abschnitte 34 der Einbuchtungen 32 des Kolbenbunds 8 ist. Dadurch befinden sich an jeder Einbuchtung 32 zwei Kreuzungspunkte 30 der erhabenen rotationssymmetrischen Struktur 21 des Prägewerkzeugs 20 und des Kolbenbunds 8, und zwar jeweils in den radial angeordneten Abschnitten 33 des Kolbenbunds 8 einer Einbuchtung 32. Dabei ist es besonders vorteilhaft, wenn der Ringdurchmesser der erhabenen rotationssymmetrischen Struktur 21 des Prägewerkzeugs 20 zwar kleiner als der Ringdurchmesser des Kolbenbunds 8 ist, aber dennoch so groß ist, dass die erhabene rotationssymmetrische Struktur 21 des Prägewerkzeugs 20 an ihrer Außenseite, bezogen auf den Ringmittelpunkt, entlang des gesamten Ringumfangs, aber außerhalb der Einbuchtungen 32, mit einem Teilbereich der Ringbreite auf einem Teilbereich der Ringbreite an der Innenseite, bezogen auf den Ringmittelpunkt, des Kolbenbunds 8 aufliegt und diesen ebenfalls in eine flachere Form druckumformt (s. Fig. 5 rechts).

Im Falle von mäanderförmigen Ausbuchtungen des Kolbenbunds 8 ist der Ringdurchmesser der erhabenen rotationssymmetrischen Struktur 21 vorteilhafterweise größer als der Ringdurchmesser des Kolbenbunds 8 ohne Einbeziehung der mäanderförmigen Ausbuchtungen, jedoch kleiner als der Ringdurchmesser einer gedachten Rings entlang der tangential verlaufenden Abschnitte 34 der Ausbuchtungen des Kolbenbunds 8. Dadurch befinden sich ebenfalls an jeder Ausbuchtung zwei Kreuzungspunkte 30 der erhabenen rotationssymmetrischen Struktur 21 des Prägewerkzeugs 20 und des Kolbenbunds 8, und zwar jeweils in den radial angeordneten Abschnitten 33 des Kolbenbunds 8 einer Ausbuchtung.

### Bezugszeichenliste

- 1: Kolben
- 2: Kolbengleitaggregat
- 3: Zylinder
- 4: scheibenförmiger Grundkörper
- 5: ein Bereich des Zylinders
- 6: ein anderer Bereich des Zylinders
- 7: Medium
- 8: Kolbenbund
- 9: äußere Wandung
- 10: innere Wandung
- 11: Aussparung in der äußeren Wandung
- 12: Aussparung in der inneren Wandung
- 13: Strömungspfad
- 14: gekrümmt verlaufender Bereich des Strömungspfads
- 15: Dichtelement
- 20: Prägewerkzeug
- 21: erhabene rotationssymmetrische Struktur
- 30: Kreuzungspunkt
- 31: abgeflachtere Form des Kolbenbunds
- 32: Aus- oder Einbuchtung des Kolbenbunds
- 33: radial verlaufender Abschnitt des Kolbenbunds
- 34: tangential verlaufender Abschnitt des Kolbenbunds

## Patentansprüche

1. Verfahren zur Herstellung eines Kolbens (1), welcher an einem Kolbengleitaggregat (2) befestigbar ist, welches entlang seiner Längsachse (A_{L}) in einem Zylinder (3) bewegbar ist, wobei der Kolben (1) einen scheibenförmigen Grundkörper (4) aufweist, wobei der Kolben (1) dazu geeignet und bestimmt ist, zwei Bereiche (5, 6) des mit einem Medium (7) gefüllten Zylinders (3) gegeneinander abzudichten, umfassend die Schritte:
a. Herstellung des Kolbens (1) durch Pressen eines Materials in eine Kolbenform;
b. Einpressen wenigstens eines Strömungspfads (13) in den Kolben (1), mittels eines Prägewerkzeugs (20), welches eine erhabene und rotationssymmetrische Struktur (21) aufweist,
**dadurch gekennzeichnet, dass**
c. die erhabene, rotationssymmetrische Struktur (21) des Prägewerkzeugs (20) beim Aufsetzen auf den Kolben (1), welcher einen ringförmigen Kolbenbund (8) umfasst, mindestens einen Kreuzungspunkt (30) mit dem ringförmigen Kolbenbund (8) aufweist,
d. wobei durch das Einpressen der erhabenen, rotationssymmetrischen Struktur (21) des Prägewerkzeugs (20) in den Kolben (1) an dem mindestens einen Kreuzungspunkt (30) der ringförmige Kolbenbund (8) zumindest teilweise in eine abgeflachtere und/oder vertiefte Form (31) druckumgeformt wird.

2. Verfahren nach Anspruch 1,
**dadurch gekennzeichnet, dass**
der ringförmige Kolbenbund (8) zumindest eine mäanderförmige Aus- und/oder Einbuchtung (32) aufweist, welche bevorzugt mindestens einen radial (33) und einen tangential (34) zum Kolben (1) ausgerichteten Abschnitt aufweist.

3. Verfahren nach Anspruch 2,
**dadurch gekennzeichnet, dass**
der mindestens eine Kreuzungspunkt (30) der rotationssymmetrischen Struktur (21) des Prägewerkzeugs (20) innerhalb der zumindest einen mäanderförmigen Aus- oder Einbuchtung (32) des ringförmigen Kolbenbundes (8) angeordnet ist.

4. Verfahren nach Anspruch 2,
**dadurch gekennzeichnet, dass**
der mindestens eine Kreuzungspunkt (30) der rotationssymmetrischen Struktur (21) des Prägewerkzeugs (20) in dem zumindest einen radial zum Kolben (1) ausgerichteten Abschnitt (33) der zumindest einen mäanderförmigen Aus- oder Einbuchtung (32) des ringförmigen Kolbenbundes (8) angeordnet ist.

## Claims

1. A method for producing a piston (1), which is attachable to a piston sliding unit (2), which is movable along its longitudinal axis (A_{L}) in a cylinder (3), wherein the piston (1) has a disc-shaped base body (4), wherein the piston (1) is suitable and intended to seal two regions (5, 6) of the cylinder (3) filled with a medium (7) against each other, comprising the steps:
a. producing the piston (1) by pressing a material into a piston mould;
b. pressing at least one flow path (11) into the piston (1), by means of an embossing tool (20) which has a raised and rotationally symmetrical structure (21),
**characterized in that**
c. the piston (1) comprises an annular piston collar (8), wherein the raised, rotationally symmetrical structure (21) of the embossing tool (20) has at least one point of intersection (30) with the annular piston collar (8) when the embossing tool (20) is placed on the piston (1),
d. the annular piston collar (8) is at least partially pressure-formed into a flattened and/or recessed shape (31) by pressing the raised, rotationally symmetrical structure (21) of the embossing tool (20) into the piston (1) at the at least one point of intersection (30).

2. The method according to claim 1,
**characterized in that** the annular piston collar (8) has at least one meander-shaped convexity and/or concavity (32), which preferably has at least one section oriented radially (33) and one section oriented tangentially (34) to the piston (1).

3. The method according to claim 2,
**characterized in that** the at least one point of intersection (30) of the rotationally symmetrical structure (21) of the embossing tool (20) is arranged within the at least one meander-shaped convexity or concavity (32) of the annular piston collar (8).

4. The method according to claim 2,
**characterized in that** the at least one point of intersection (30) of the rotationally symmetrical structure (21) of the embossing tool (20) is arranged within the at least one section oriented radially (33) to the piston (1) of the at least one meander-shaped convexity or concavity (32) of the annular piston collar (8).

## Revendications

1. Procédé de fabrication d'un piston (1) pouvant être fixé à un ensemble coulissant de piston (2) qui est mobile le long de son axe longitudinal (A_{L} ) dans un cylindre (3), le piston (1) comportant un corps de base (4) en forme de disque, le piston (1) étant adapté et destiné à assurer l'étanchéité entre deux zones (5, 6) du cylindre (3) rempli d'un fluide (7), comprenant les étapes suivantes :
a. la fabrication du piston (1) par moulage d'un matériau dans un moule de piston ;
b. l'estampage d'au moins un chemin d'écoulement (13) dans le piston (1) à l'aide d'un outil d'estampage (20) présentant une structure en relief et à symétrie de révolution (21),
**caractérisé en ce que**
c. la structure en relief à symétrie de révolution (21) de l'outil d'estampage (20), lorsqu'elle est placée sur le piston (1) qui comprend un collet de piston annulaire (8), présente au moins un point d'intersection (30) avec le collet de piston annulaire (8),
d. le collet de piston annulaire (8) étant au moins partiellement déformé par compression pour prendre une forme (31) plus aplatie et/ou creusée par l'estampage de la structure en relief à symétrie de révolution (21) de l'outil d'estampage (20) dans le piston (1) au niveau dudit au moins un point d'intersection (30).

2. Procédé selon la revendication 1,
**caractérisé en ce que**
le collet de piston annulaire (8) présente au moins un renflement et/ou un creux en forme de méandre (32), qui comporte de préférence au moins une partie orientée radialement (33) et une partie orientée tangentiellement (34) par rapport au piston (1).

3. Procédé selon la revendication 2,
**caractérisé en ce que**
ledit au moins un point d'intersection (30) de la structure à symétrie de révolution (21) de l'outil d'estampage (20) est disposés dans ledit au moins un renflement ou creux en forme de méandre (32) du collet de piston annulaire (8).

4. Procédé selon la revendication 2,
**caractérisé en ce que**
ledit au moins un point d'intersection (30) de la structure à symétrie de révolution (21) de l'outil d'estampage (20) est disposé dans ladite au moins une partie orientée radialement (33) par rapport au piston (1) dudit au moins un renflement ou creux en forme de méandre (32) du collet de piston annulaire (8).
